# EUROPÄISCHE PATENTSCHRIFT

(11) **EP 0 315 578 B1**
(45) Veröffentlichungstag und Bekanntmachung des Hinweises auf die Patenterteilung: **31.03.1993**
(21) Anmeldenummer: 88730236.2
(22) Anmeldetag: 26.10.1988
(51) Int. Cl.: F24D 19/10, F24H 9/00, F24D 3/10

(54) **Umlaufwasserheizung**
Heating with water circuit
Chauffage à circuit fermé

(30) Priorität: 03.11.1987 AT 2894/87; 08.02.1988 AT 240/88; 24.03.1988 AT 781/88; 27.06.1988 AT 1651/88
(43) Veröffentlichungstag der Anmeldung: 10.05.1989
(73) Patentinhaber: Joh. Vaillant GmbH u. Co., 42810 Remscheid (DE); n.v. Vaillant s.a., 1620 Drogenbos (BE); VAILLANT S.A.R.L, 94537 Rungis Cedex (FR); VAILLANT Ges.m.b.H, 1233 Wien (AT); Vaillant Ltd., Rochester Kent ME2 4EZ (GB); Vaillant-Schonewelle B.V., 1100 DT Amsterdam (NL); Vaillant GmbH, 8953 Dietikon 1 (CH)
(72) Erfinder: Hellmann, Donald, D-5860 Iserlohn (DE); Henche, Wolfgang, D-5630 Remscheid (DE); König, Wolfgang, D-5632 Wermelskirchen (DE); Plate, Joachim, D-5632 Wermelskirchen (DE); Tenhumberg, Jürgen, Dr., D-5608 Radevormwald (DE)
(74) Vertreter: Heim, Johann-Ludwig, Dipl.-Ing.

(56) Entgegenhaltungen:
- CH-A- 496 930
- DE-A- 1 579 981
- DE-A- 1 679 724
- DE-A- 2 500 971
- DE-A- 3 030 565
- GB-A- 989 180
- US-A- 3 148 828
- US-A- 3 840 175

## Beschreibung

Die Erfindung betrifft eine von einem Gliederkessel gespeiste Umlaufwasserheizung mit einem Heizkreis, der eine den Vor- und den Rücklauf verbindende Umgehungsleitung sowie eine Umlaufpumpe aufweist, wobei ein in einem der an den Kessel ansetzenden Anschlüsse des Heizkreises angeordnetes thermostatisch gesteuertes Ventil mit einem Temperaturfühler, insbesondere einem Dehnstoffkörper, vorgesehen ist, das bei Unterschreitung eines Temperaturgrenzwertes den Kessel vom Heizungsumlauf abkoppelt und erst bei Erreichen oder Überschreiten dieses Temperaturgrenzwertes koppelt.

Dieser Umlaufwasserheizer ist aus der DE-OS 15 79 981 bekannt. Dabei ist ein thermostatisches Ventil vorgesehen, um den Kessel in allen Betriebszuständen, also bei einem Kaltstart, im Ein-Aus-Betrieb, bei sehr geringen und auch bei höheren Vorlauftemperaturen vor kaltem Rücklaufwasser zu schützen.

Ein thermostatisches Ventil zur Steuerung der Speicherladetemperatur wird in der US-PS 3 148 828 beschrieben.

Aufgabe der Erfindung ist es, das thermostatische Ventil besonders raum- und energiesparend anzuordnen sowie möglichst einfach und in kompakter Bauweise auszubilden. Außerdem soll das thermostatische Ventil derart konzipiert sein, daß gegebenenfalls auch ein nachträglicher Einbau in eine bestehende Heizungsanlage möglich ist.

Erfindungsgemäß wird diese Aufgabe dadurch gelöst, daß das Ventilgehäuse und der Träger des Temperaturfühlers, zum Beispiel eines Dehnstoffkörpers, eine Einheit bilden, die an einem der beiden zur Verbindung der Kesselglieder untereinander dienenden Nippel eines der beiden Endglieder des Gliederkessels koaxial befestigt ist.

Diese aus dem Ventilgehäuse und dem Träger des Temperaturfühlers, zum Beispiel eines Dehnstoffkörpers, bestehende, Anschlüsse für die Umgehungsleitung sowie für die Heizkreisumlaufleitung aufweisende Einheit kann im Rahmen der Erfindung im Anschluß des Kesselvorlaufes am Kessel befestigt sein.

Vorteilhafter ist es jedoch, diese Einheit im Anschluß des Kesselrücklaufes am Kessel zu befestigen.

Dies bringt den Vorteil, daß sich in der Zone des Rücklaufes im Kesselwasser eine Mischtemperatur ausbildet, die den Dehnstoffkörper beaufschlagt und die alleinige Regelgröße für den Durchsatz des Umlaufsystems darstellt.

Ausführungsbeispiele des Erfindungsgegenstandes bilden Gegenstände von Unteransprüchen beziehungsweise sind in den Zeichnungen dargestellt und nachstehend anhand dieser Zeichnungen erläutert. Im einzelnen zeigen
Figur 1 einen Teil-Längsschnitt durch einen Gliederkessel einer Umlaufwasserheizung im Bereich des Vorlaufanschlusses und
Figur 2 in gleicher Darstellungsweise den Rücklaufanschluß eines solchen Gliederkessels.

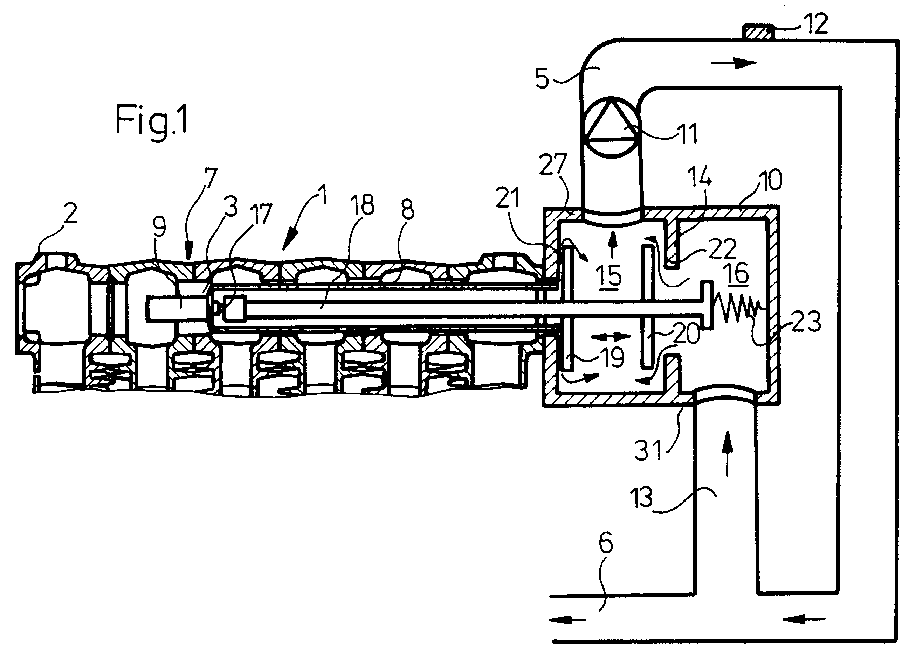

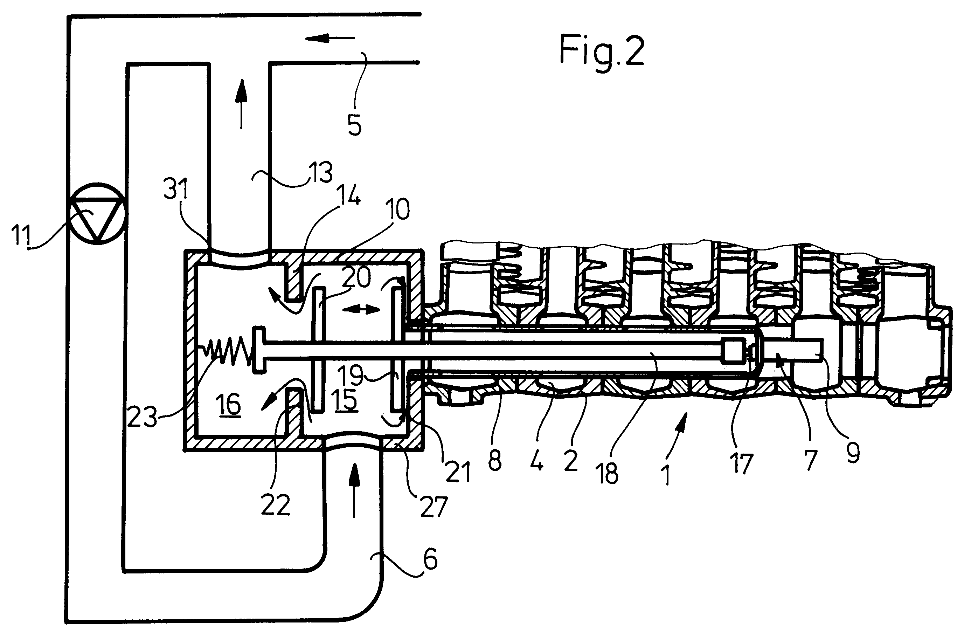

Figuren 1 und 2 zeigen zunächst gleichermaßen die oberen beziehungsweise unteren Enden zu einer Schar vereinigter, von den Abgasen eines nicht dargestellten Brenners beheizten Kesselglieder 2 eines Gliederkessels 1. Von den oberen beziehungsweise unteren Nippeln 3 beziehungsweise 4 miteinander verbundenen Kesselgliedern 2 kann entweder das rechte Endglied gemäß Figur 1 an eine zu nicht dargestellten Heizkörpern oder dergleichen Wärmeverbrauchern führende Vorlaufleitung 5 oder gemäß Figur 2 das linke Endglied an eine von den Wärmeverbrauchern ausgehende Rücklaufleitung 6 angeschlossen sein.
Der Temperaturfühler 7 kann im Rahmen der Erfindung also alternativ im Anschluß der Vorlaufleitung 5 oder im Anschluß der Rücklaufleitung 6 angeordnet werden, wobei die letztgenannte Alternative vorzuziehen ist.

In beiden Fällen besteht der Temperaturfühler im wesentlichen aus einem temperaturabhängig tätigen, das heißt seine Länge ändernden Dehnstoffkörper 9 als Weggeber, der in einem der Nippel 3 oder 4 jeweils eines der Endglieder des Kessels 1 an einem Träger 8 befestigt ist und in das Innere der wasserführenden Kesselglieder 2 einragt. Der Träger 8 besteht dabei aus einem Rohr, das die Nippel 3 beziehungsweise 4 mehrerer dem Endglied angereihter Kesselglieder 2 durchsetzt, an seinem freien Ende den Temperaturweggeber, das heißt den Dehnstoffkörper 9, und am gegenüberliegenden Ende ein Ventilgehäuse 10 trägt, von dem gemäß der Ausführungsform nach Figur 1 eine die Umlaufpumpe 11 und einen Temperaturfühler 12 enthaltende Vorlaufleitung 5 ausgeht und in das eine von der Rücklaufleitung 6 ausgehende, den Kessel 1 umgehende Umgehungsleitung 13 mündet. Dieses Ventilgehäuse 10 ist durch eine Wandung 14 in zwei Kammern unterteilt, nämlich in eine erste Kammer 15, von der die Vorlaufleitung 5 ausgeht, und in eine zweite Kammer 16, in die die Umgehungsleitung 13 mündet. Der Dehnstoffkörper 9 des Temperaturfühlers 7 trägt einen axialen Stift 17, der auf den Ventilschaft 18 kraftschlüssig einwirkt. Dieser Ventilschaft 18 trägt - bei dem dargestellten Beispiel - zwei Ventilteller 19 und 20, denen in der ersten Kammer 15 des Ventilgehäuses 10 zwei Ventilsitze, nämlich ein erster Ventilsitz 21 und ein zweiter Ventilsitz 22, zugeordnet sind. Der Ventilschaft 18 wird von einer Druckfeder 23 beeinflußt, die den Ventilteller 19 gegen den Ventilsitz 21 zu drücken trachtet und sich gegen die Innenseite einer Wandung der zweiten Kammer 16 abstützt. Das Ventil 19/21 wird bei einer Ausdehnung des Dehnstoffkörpers 9 gegen den Druck dieser Druckfeder 23 vom Stift 17 und Ventilschaft 18 geöffnet.

Die Funktion dieser Einrichtung nach Figur 1 ergibt sich wie folgt: Ist zunächst das Wasser im Gliederkessel 1 noch kalt und ist der Dehnstoffkörper 9 des Temperaturfühlers 7 dementsprechend noch kurz, liegt der Ventilteller 19 unter dem Druck der Druckfeder 23 auf dem Ventilsitz 21 auf und schließt die Verbindung zwischen dem Gliederkessel 1 und der Vorlaufleitung 5. Das Ventil 20/22 ist hingegen offen, und bei Inbetriebnahme der Umlaufpumpe 11 erfolgt ein Durchsatz über die Vorlaufleitung 5, die Umgehungsleitung 13 und die zweite und erste Kammer 16 beziehungsweise 15 des Ventilgehäuses 10.

Mit Inbetriebnahme des Kesselbrenners wird das Wasser innerhalb der Kesselglieder 2 wärmer, und der Temperaturweggeber 9 öffnet mit seinem Stift 17 allmählich das vom Ventilteller 19 und dem Ventilsitz 21 gebildete Ventil und schließt gleichzeitig allmählich das aus dem Ventilteller 20 und dem Ventilsitz 22 gebildete Ventil zwischen der ersten Kammer 15 und der zweiten Kammer 16.

Eine Zwischenstellung der beiden Ventile 19/21 und 20/22 ist in der Zeichnungsfigur veranschaulicht.

Sobald die Temperatur im Vorlauf des Gliederkessels 1 einen Soll-Wert erreicht hat, wird die Umgehungsleitung 13 durch das Ventil 20/22 geschlossen, und der Umlauf des Heizungswassers erfolgt nur noch über die erste Kammer 15 des Ventilgehäuses 10, die Vorlaufleitung 5, die Rücklaufleitung 6 und den Gliederkessel 1.

Die Ausführungsform nach Figur 2 unterscheidet sich von jener nach Figur 1 im wesentlichen nur dadurch, daß das Ventilgehäuse 10, das mit dem Temperaturfühler 7 eine Einheit bildet, an den Rücklaufnippel 4 eines Kessel-Endgliedes 2 angeschlossen ist.

In die die Ventilteller 19 und 20 aufnehmende erste Kammer 15 des Ventilgehäuses 10 mündet die Rücklaufleitung 6, und von der durch die Wandung 14 begrenzte Kammer 16 geht die Umgehungsleitung 13 aus.

Die Funktion dieser Einrichtung ist im übrigen dieselbe wie bei der Einrichtung nach Figur 1. Solange der Gliederkessel 1 kalt ist, wird das Heizungswasser über die Umgehungsleitung 13 durch das Ventilgehäuse 10 gefördert. Sobald es wärmer wird, fördert die Umlaufpumpe 11 zunehmend über den Gliederkessel 1 und nach Erreichen der Soll-Temperatur des Kesselwassers nur noch über den Gliederkessel 1.

## Patentansprüche

1. Von einem Gliederkessel gespeiste Umlaufwasserheizung mit einem Heizkreis, der eine den Vor- und den Rücklauf verbindende Umgehungsleitung sowie eine Umlaufpumpe aufweist, wobei ein in einem der an den Kessel ansetzenden Anschlüsse des Heizkreises angeordnetes thermostatisch gesteuertes Ventil mit einem Temperaturfühler, insbesondere einem Dehnstoffkörper, vorgesehen ist, das bei Unterschreitung eines Temperaturgrenzwertes den Kessel vom Heizungsumlauf abkoppelt und erst bei Erreichen oder Überschreiten dieses Temperaturgrenzwertes koppelt, dadurch gekennzeichnet, daß das Ventilgehäuse (10) und der Träger (8) des Temperaturfühlers, zum Beispiel eines Dehnstoffkörpers (9), eine Einheit bilden, die an einem der beiden zur Verbindung der Kesselglieder (2) untereinander dienenden Nippel (3 beziehungsweise 4) eines der beiden Endglieder des Gliederkessels (1) koaxial befestigt ist.

2. Umlaufwasserheizung nach Patentanspruch 1, dadurch gekennzeichnet, daß die aus dem Ventilgehäuse (10) und dem Träger (8) des Temperaturfühlers, zum Beispiel eines Dehnstoffkörpers (9), bestehende, Anschlüsse (27, 31) für die Umgehungsleitung (13) sowie für die Heizkreisumlaufleitung (5) aufweisende Einheit im Anschluß des Kesselvorlaufes am Kessel (1) befestigt ist.

3. Umlaufwasserheizung nach einem der vorangehenden Patentansprüche, dadurch gekennzeichnet, daß der Träger (8) des Temperaturfühlers, vorzugsweise eines Dehnstoffkörpers (9), in einem der zur Verbindung der Kesselglieder (2) dienenden Nippel (3 oder 4) verschraubt und sein Weggeber, zum Beispiel der Dehnstoffkörper (9), in dem in das Innere des Kessels (1) ausragenden Teil des Trägers (8) gelagert ist, und daß dieser Träger (8) an seinem gegenüberliegenden, nach außen ragenden Ende das Ventilgehäuse (10) mit den Anschlüssen (27, 31) für die Umgehungsleitung (13) und die Heizkreisumlaufleitung (5) trägt.

## Claims

1. A water-circulating room-heating system which is fed by a sectional boiler and comprises a roof-heating circuit, which includes a by-pass line that connects the flow line and the return line, and a circulating pump, wherein a thermostat-controlled valve is included in one of the ports of the room-heating circuit which are connected to the boiler and is provided with a temperature sensor, particularly an expansion element, which in, response to a temperature drop below a lower temperature limit uncouples the boiler from the room-heating circuit and couples it again when the temperature rises to or above that lower limit, characterized in that the valve housing (10) and the carrier (8) of the temperature sensor consisting, e.g., of an expansion element (9) constitute a unit, which is coaxially secured to one of the two nipples (3 or 4) which are provided on one of the two terminal sections of the sectional boiler (1) and interconnect the boiler sections (2).

2. A water-circulating room-heating system according to claim 1, characterized in that the unit which consists of the valve housing (10) and the carrier (8) of the temperature sensor, such as an expansion element (9), and is provided with ports (27, 31) for the by-pass line (13) and for the circulating line (5) of the room-heating circuit is secured to the boiler (1) in the port connecting the flow line to the boiler.

3. A water-circulating room-heating system according to any of the preceding claims, characterized in that the carrier (8) of the temperature sensor preferably consisting of an expansion element (9) is screwed in one of the nipples (3 or 4) which interconnect the boiler sections (2) and its actuating element, such as the expansion element (9), is movably mounted in that portion of the carrier (8) which protrudes into the interior of the boiler (1), and that carrier (8) at its outwardly protruding opposite end carries the valve housing (10) with the ports (27, 31) for the by-pass line (13) and the circulating line (5) of the room-heating circuit.

## Revendications

1. Système de chauffe-eau à circulation alimenté par une chaudière sectionnée, avec un circuit de chauffage qui comprend un tuyau de dérivation reliant le tuyau de départ au tuyau de retour, ainsi qu'une pompe de circulation, une valve actionnée par une sonde thermométrique, de préférence un corps de dilatation, étant prévue dans un des raccords du circuit de chauffage sur la chaudière et coupant la chaudière du circuit de chauffage au moment où une température limite n'est pas atteinte, liaison qui est rétablie lorsque cette température est atteinte ou dépassée, caractérisé par le fait que le corps de valve (10) et le support (8) de la sonde thermométrique, par exemple d'un corps de dilatation (9), forment une unité fixée coaxialement dans l'un des deux nipples (3 ou 4) de l'une des sections en bout de la chaudière (1).

2. Système de chauffe-eau à circulation suivant la revendication 1, caractérisé par le fait que l'unité constituée par le corps de valve (10) et le support (8) de la sonde thermométrique, par exemple d'un corps de dilatation (9), et comprenant des raccords (27, 31) pour le tuyau de dérivation (13) et la conduite principale (5) du circuit de chauffage, est fixée sur la chaudière (1) dans le raccord du tuyau de départ.

3. Système de chauffe-eau à circulation suivant l'une des revendications précédentes, caractérisé par le fait que le support (8) de la sonde thermométrique, de préférence d'un corps de dilatation (9), est vissé dans un nipple (3 ou 4) servant à l'assemblage des sections (2) de la chaudière, et que son organe actif, par exemple le corps de dilatation (9), est logé dans la partie du support (8) pénétrant dans l'intérieur de la chaudière (1), et que l'autre bout de ce support (8), orienté vers l'extérieur, porte le corps de valve (10) avec les raccords (27, 31) pour le tuyau de dérivation (13) et la conduite principale (5) du circuit de chauffage.
